# FASCICULE DE BREVET EUROPEEN

(11) **EP 3 110 983 B1**
(45) Date de publication et mention de la délivrance du brevet: **12.02.2020**
(21) Numéro de dépôt: 15714854.5
(22) Date de dépôt: 25.02.2015
(51) Int. Cl.: C22B 7/00, B09B 3/00, B09B 5/00

(54) **PROCÉDÉ DE TRAITEMENT D'UN SUPPORT DONT UNE FACE EST AU MOINS PARTIELLEMENT RECOUVERTE D'UNE COUCHE D'OXYDES INDIUM-ETAIN (ITO), ET DISPOSITIF ASSOCIÉ**
VERFAHREN ZUR BEHANDLUNG EINES TRÄGERS, DESSEN EINE SEITE ZUMINDEST TEILWEISE MIT EINER INDIUM-ZINN-OXID (ITO)-SCHICHT BESCHICHTET IST, UND ZUGEHÖRIGE VORRICHTUNG
PROCESS FOR TREATING A SUPPORT, ONE FACE OF WHICH IS AT LEAST PARTIALLY COVERED WITH AN INDIUM-TIN OXIDE (ITO) LAYER, AND ASSOCIATED DEVICE

(30) Priorité: 27.02.2014 FR 1451572
(43) Date de publication de la demande: 04.01.2017
(73) Titulaire: Centre National de la Recherche Scientifique (C.N.R.S.), 75794 Paris Cedex 16 (FR)
(72) Inventeur: MASCHKE, Ulrich, F-59655 Villeneuve d'Ascq (FR); MOUNDOUNGOU, Idriss, F-78193 Cedex Trappes (FR); FOSSI TABIEGA, Guy-Joel, F-59655 Villeneuve d'Ascq (FR); APPLETON, Philippe, F-59260 Lezennes (FR)
(74) Mandataire: Lavoix
(86) Numéro de dépôt international: PCT/FR2015/050451
(87) Numéro de publication internationale: WO 2015/128581

(56) Documents cités:
- EP-A1- 2 705 910
- JP-A- 2005 292 394
- JP-A- 2008 216 566
- TW-B- I 286 953
- Ramona Götze ET AL: "Challenges for the Recovery of Critical Metals from Waste Elec- tronic Equipment -A Case Study of Indium in LCD Panels", Electronics Goes Green 2012+(EGG), 2012., 1 janvier 2012 (2012-01-01), XP055155108, Extrait de l'Internet: URL:http://ieeexplore.ieee.org/ielx5/63532 94/6360408/06360485.pdf?tp=&arnumber=63604 85&isnumber=6360408 [extrait le 2014-11-26]
- KAI ZHAO ET AL: "Study on recycling process for EOL liquid crystal display panel", INTERNATIONAL JOURNAL OF PRECISION ENGINEERING AND MANUFACTURING, vol. 14, no. 6, 1 juin 2013 (2013-06-01), pages 1043-1047, XP055154628, ISSN: 2234-7593, DOI: 10.1007/s12541-013-0140-9

## Description

La présente invention concerne un procédé de traitement d'un élément du type comprenant au moins un premier support présentant une face fonctionnelle au moins partiellement recouverte d'une couche d'oxydes d'indium et d'étain (ITO).

Les écrans à affichage à cristaux liquides, encore appelés écrans LCD pour « liquid crystal displays » contiennent de l'indium. Le prix de l'indium a fortement augmenté ces dernières années, du fait de l'amenuisement du gisement. L'épuisement du gisement est prévu pour 2025. Dans la technologie des écrans plats, l'indium n'est pas utilisé à l'état pur mais sous la forme d'un mélange d'oxyde d'indium et d'oxyde d'étain appelé ITO (« Indium Tin Oxyde « ) et contient, par exemple, en masse, 90% de In₂O₃ et 10% de SnO₂. L'ITO est un composé électriquement conducteur, incolore et transparent. Il est en général déposé en couches minces, sous vide, par pulvérisation cathodique ou par vaporisation en phase vapeur. L'épaisseur du dépôt est en général comprise entre 100 à 200 nm suivant les fabricants.

Un écran LCD est constitué de deux plaques de verre collées et scellées l'une à l'autre pour former un seul élément appelé la dalle.

La dalle est formée de la plaque TFT et de la plaque filtre coloré qui sont montées en face-à-face de manière à former entre elles, un espace qui est rempli de cristaux liquides. La plaque TFT est une plaque de verre recouverte d'une couche de silicium gravée qui forme des transistors (« Thin Film Transistor ») associés à des capacités de stockage. Un film polarisant en polymère est collé sur sa face externe. La surface de la plaque TFT qui est montée en regard de la plaque filtre coloré est constituée d'une matrice ligne-colonne d'ITO qui permet d'établir les connexions électriques de chaque transistor. On estime que le taux de couverture par l'ITO est de 40%. A titre d'exemple, l'épaisseur de la couche d'ITO est de 0,2 µm environ ; l'épaisseur de la couche de silicium TFT ne dépasse pas 100 µm, généralement.

La plaque filtre coloré est une plaque de verre sur laquelle sont gravés les pixels constitués des trois couleurs: rouge, vert et bleu. Un film polarisant en polymère est collé sur sa face externe. Toute la surface de la face montée en regard de la plaque TFT est recouverte d'une couche d'ITO d'environ 0,2µm d'épaisseur. Les pixels précités sont situés sous la couche d'ITO. Pour augmenter l'effet de contraste, l'ensemble des sous-pixels est entouré d'une zone opaque de couleur noire appelée Black Matrix, située sous la couche d'ITO.

L'espace entre ces deux plaques (qui présente une épaisseur de 3 à 5µm), est rempli avec des cristaux liquides. L'ITO est utilisé comme couche électro-conductrice pour appliquer le champ électrique sur les cristaux liquides, et pour ses propriétés de "transparence optique".

La dalle est reliée à tous les dispositifs électroniques et électriques puis intégrée dans la coque plastique pour former l'écran de télévision ou d'ordinateur ou le panneau d'affichage public, par exemple. En fin de vie de l'appareil, se pose le problème du recyclage des différentes matières premières, en particulier, de l'indium.

Diverses méthodes de traitement des écrans plats LCD ont déjà été développées. Certaines de ces techniques utilisent du chlorure de polyvinyle. La plupart du temps, la dalle qui constitue l'écran doit être réduite en poudre ce qui provoque la contamination de la solution contenant l'indium par de nombreux autres composés provenant notamment du filtre coloré, de la couche de silicium, des films qui revêtent les plaques, des composants électroniques et de la plaque de verre elle-même (voir notamment WO 2007/015392 et l'abrégé du document KR 2011/0080557).

Le document JP 2008 216566 décrit un procédé de recyclage d'un écran CD qui comprend la séparation des deux supports qui constituent l'écran. L'indium est récupéré par grattage de la couche conductrice. La poudre produite par le grattage est brûlée pour éliminer les composés organiques et seul l'indium subsiste ainsi sous forme de poudre.

Le document JP 2005 292394 décrit un procédé de recyclage d'un écran contenant des cristaux liquides dans lequel les deux plaques de verre sont séparées puis traitées. La plaque comprenant la couche d'indium est disposée verticalement dans un bac contenant un mélange d'acide chlorhydrique et d'acide nitrique. La plaque est totalement immergée dans le mélange précité jusqu'à dissolution complète de l'ITO. Ce procédé ne peut pas être facilement mis en œuvre de manière industrielle et en particulier, en continu.

L'utilisation d'une solution acide dans des procédés de récupération de couches d'ITO à partir de plaques de verre de rebut est également décrite dans les documents TW I 286 953 B et EP 2 705 910 A1, ainsi que les articles de R. Götze et al. dans "Electronics Goes Green 2012" publié le 1er janvier 2012, et de K. Zhao et al. dans "International Journal of Precision Engineering and Manufacturing", vol. 14, no. 6, pages 1043-1047, publié le 1er juin 2013.

Un but de la présente invention est de fournir un nouveau procédé qui permet de retirer au moins partiellement la couche d'ITO recouvrant au moins partiellement une face d'un support.

Un autre but de l'invention est de proposer un procédé de traitement qui permet de récupérer l'indium en minimisant la quantité d'impuretés et/ou la diversité de nature des impuretés.

Un autre but de la présente invention est de proposer un procédé de traitement tel que précité qui soit facile à mettre en œuvre à l'échelle industrielle.

Un autre but de la présente invention est de proposer un procédé de traitement tel que précité qui permet un traitement rapide.

Un autre but de la présente invention est de proposer un procédé de traitement tel que précité qui permet de traiter des supports de toutes tailles.

Pour atteindre au moins un des buts précités, la présente invention propose un procédé de traitement d'un élément du type comprenant au moins un premier support présentant une face fonctionnelle au moins partiellement recouverte d'une couche d'oxyde d'indium et d'étain (ITO), selon lequel , on met en contact ladite face fonctionnelle avec une solution acide de manière à dissoudre ladite couche d'ITO dans ladite solution acide. De manière caractéristique, selon l'invention, on déplace ledit premier support au moins après avoir mis en contact au moins ladite face fonctionnelle avec ladite solution acide. Par ailleurs, la présente invention prévoit également que ledit premier support présente une épaisseur qui s'étende sensiblement perpendiculairement à ladite face fonctionnelle, que ladite solution acide forme une surface libre, que l'on dispose ladite face fonctionnelle de manière à ce qu'elle soit inclinée vers ladite surface libre de ladite solution acide et que l'on fasse pénétrer au moins ladite face fonctionnelle dans ladite solution acide. En particulier, selon la présente invention, ladite surface fonctionnelle et ladite surface libre de ladite solution acide forment un angle α sensiblement égal ou supérieur à 3°.

Le procédé de l'invention peut ainsi être mis en œuvre en continu ; il est adapté à une mise en œuvre à grande échelle ; il est donc industrialisable.

Selon un mode de mise en œuvre, ledit élément précité comprend un deuxième support présentant une face fonctionnelle, lesdites faces fonctionnelles sont montées en regard l'une de l'autre, on sépare lesdits premier et deuxième supports l'un de l'autre puis on met en contact ladite face fonctionnelle dudit premier et/ou deuxième support en contact avec ladite solution acide de manière à dissoudre ladite couche d'ITO dans ladite solution acide.

L'élément précité qui comporte deux supports, peut être un écran d'affichage, par exemple, un écran d'ordinateur, un écran de télévision ou un écran d'affichage public. L'invention n'est néanmoins pas limitée à ce type d'élément.

C'est le mérite des inventeurs que d'avoir mis en évidence que le fait de démonter les deux supports avant de les traiter permet de réduire la contamination de l'indium récupéré et d'augmenter également la quantité d'indium récupérée. En effet, selon le procédé de l'invention, seul l'ITO est dissout dans la solution acide. De plus, le traitement selon l'invention peut être facilement mis en œuvre industriellement et s'avère être rapide.

Dans toute la présente demande, le terme « ITO » concerne tout mélange d'oxyde d'indium et d'oxyde étain et n'est pas limité au sens de la présente invention à la composition précitée en référence à l'art antérieur.

La présente invention peut s'appliquer aux dalles telles que précitées, c'est-à-dire à des supports de verre. La nature du support n'est néanmoins pas limitée selon la présente invention. Le support peut être du verre, un polymère ou tout autre matériau susceptible de résister au traitement par la solution acide. De même, la forme du support n'est pas limitée selon l'invention dès lors qu'il présente une face fonctionnelle. Avantageusement, le support est une plaque rigide ou souple, voire une feuille.

Lorsque l'élément comprend des cristaux liquides contenus entre ledit premier et ledit deuxième support, avantageusement, on retire lesdits cristaux liquides restant sur ladite face fonctionnelle dudit premier et/ou deuxième support après la séparation desdits supports et avant la mise en contact avec ladite solution acide. La couche de cristaux liquides restant sur la face fonctionnelle peut être raclée mécaniquement ou dissoute chimiquement à l'aide d'un solvant. La méthode permettant de retirer les cristaux liquides n'est pas limitative de l'invention. La couche de cristaux liquides peut notamment être dissoute par affleurement de la face fonctionnelle avec la surface libre d'une solution de solvant adapté pour dissoudre les cristaux liquides.

La mise en contact de la face fonctionnelle du support n'est pas limitée selon l'invention. Le support peut être totalement ou partiellement immergé dans la solution acide. Seule la face fonctionnelle peut également être mise en contact avec la solution acide. La mise en contact peut être mise en œuvre par déplacement du support dans la solution ou par augmentation du niveau de cette dernière, le support étant disposé au-dessus de la surface libre de la solution acide.

Selon la présente invention, le premier et/ou deuxième support est introduit dans la solution acide de manière à ce que son épaisseur (qui est par exemple sensiblement perpendiculaire à la face fonctionnelle) soit en contact avec la solution acide sur une hauteur correspondant au moins sensiblement à l'épaisseur de la couche d'ITO.

De même, le premier et/ou deuxième support peut être laissé immobile dans la solution acide, le temps que la dissolution de l'indium soit satisfaisante. Avantageusement, le premier et/ou deuxième support présentant une épaisseur qui s'étend sensiblement perpendiculairement à ladite face fonctionnelle, ladite solution acide formant une surface libre, on dispose ladite face fonctionnelle de manière à ce qu'elle soit inclinée vers la surface libre de ladite solution acide et on fait pénétrer ladite face fonctionnelle dans ladite solution acide.

L'inclinaison de la face fonctionnelle du support et du support lui-même permet d'éviter la formation d'un film d'air ou de bulles d'air au niveau de la face fonctionnelle, celle-ci est donc parfaitement mouillée par la solution acide, ce qui assure une dissolution satisfaisante et uniforme de l'indium sur toute la surface de la face fonctionnelle.

Selon la présente invention, la face fonctionnelle et ladite surface libre dudit bain forment un angle α sensiblement égal ou inférieur à 3° et de préférence sensiblement égal à 1,5°.

Avantageusement, ladite solution acide est à une température sensiblement égale ou supérieure à 25°C et sensiblement égale ou inférieure à 70°C, de préférence sensiblement égale ou supérieure à 40°C et sensiblement égale ou inférieure à 50°C, de préférence sensiblement égale à 45°C. Les inventeurs ont en effet mis en évidence qu'une température plus élevée que 25°C permettait d'accélérer la dissolution de la couche d'ITO.

Selon un mode de mise en œuvre, on génère des ultrasons dans ladite solution acide de manière à provoquer le phénomène de cavitation, notamment au niveau de ladite face fonctionnelle. La génération d'ultrasons permet en plus du phénomène de cavitation qui favorise la dissolution de l'ITO d'augmenter la température de la solution acide.

A titre d'exemple, on génère des ultrasons ayant une fréquence sensiblement égale ou supérieure à 20 kHz et sensiblement égale ou inférieure à 30 kHz.

Avantageusement, on génère des ultrasons ayant une densité de puissance sensiblement égale ou supérieure à 57 W/L et de préférence sensiblement égale à 103W/L. La densité de puissance peut être supérieure à 103W/L.

Selon un mode de mise en œuvre du procédé de l'invention, on met en circulation ladite solution acide au moins au niveau de la surface libre de ladite solution. Cette mise en circulation de la solution acide permet d'évacuer la chaleur éventuellement produite par les ultrasons ou autre. En effet, cette mise en circulation augmente la surface de la solution en contact avec l'air extérieur. Lorsqu'un support recouvre la surface libre de la solution acide, les échanges thermiques avec l'air extérieur sont donc limités ; le renouvellement de la solution au niveau de la surface libre augmente les échanges thermiques. Cette mise en circulation permet donc de stabiliser la température de la solution acide. La mise en circulation précitée permet également d'homogénéiser la solution acide : on obtient ainsi une solution acide contenant une concentration homogène de composés dissouts, à proximité de la face fonctionnelle et ailleurs. La solution acide n'est ainsi pas saturée en ITO au niveau de la face fonctionnelle ce qui diminuerait son efficacité. Enfin, la Demanderesse a mis en évidence que cette circulation permettait d'améliorer la dissolution de l'ITO.

La mise en circulation peut être mise en œuvre de diverses manières, par agitation, par pompage et injection ou tout autre moyen connu.

Avantageusement, on maintient la température de ladite solution acide en contact avec ladite face fonctionnelle par ajout d'une quantité donnée de ladite solution acide à une température donnée. On crée ainsi une circulation de ladite solution acide. Ainsi, si l'on utilise des ultrasons, la température sera également maintenue à une valeur donnée en ajoutant de la solution acide à une température inférieure. Au contraire, si on souhaite chauffer la solution acide dans la cuve, on y ajoutera une quantité donnée de solution acide à une température plus élevée.

Avantageusement, ladite solution acide est une solution aqueuse contenant de l'acide chlorhydrique et de l'acide nitrique, de préférence une solution contenant en volume, de 45% à 55% d'eau, de 35% à 45% d'acide chlorhydrique à 33% en volume et de 5 à 15% d'acide nitrique à 60% en volume, de préférence elle contient sensiblement 50% d'eau, 45% d'acide chlorhydrique à 33% en volume et 5% d'acide nitrique à 60% en volume.

Selon un mode de mise en œuvre particulier, ledit premier support et/ou ledit deuxième support comporte une face fonctionnelle recouverte d'un filtre coloré lui-même recouvert par ladite couche d'ITO. Le support peut être une plaque de verre.

Avantageusement, on met en contact au moins ladite face fonctionnelle dudit premier et/ou deuxième support avec un premier bain de solution acide puis avec au moins un deuxième bain de solution acide de manière à dissoudre ladite couche d'ITO. Au lieu d'utiliser un seul bain et d'attendre une dissolution souhaitable de l'indium, on peut, comme précité, traiter le support dans plusieurs bains de solution acide, chaque bain contribuant à dissoudre une fraction de l'ITO. On ajuste ainsi la vitesse de passage du support dans les bains d'acide et le nombre de bains pour obtenir la dissolution requise. La solution acide peut avoir une concentration différente selon le bain.

La présente invention concerne également un dispositif permettant la mise en œuvre du procédé de l'invention, le dispositif étant du type comprenant au moins une cuve remplie d'une solution acide formant une surface libre. Selon l'invention, de manière caractéristique, il comprend en outre des moyens de convoyage d'un support présentant une face fonctionnelle au moins partiellement recouverte d'ITO, ladite cuve et lesdits moyens de convoyage sont adaptés pour mettre en contact au moins ladite face fonctionnelle dudit support avec ladite solution acide contenue dans ladite cuve de manière à ce que ladite face fonctionnelle soit inclinée vers ladite surface libre de ladite solution acide en formant un angle α sensiblement égal ou inférieur à 3°, et pour immerger l'épaisseur dudit support sur une hauteur au moins égale à l'épaisseur de ladite couche d'ITO, lorsque lesdits moyens de convoyage coopèrent avec ledit support et en ce que lesdits moyens de convoyage sont conformés pour déplacer ledit support dans ladite cuve.

Le temps de passage du support et la taille de la cuve sont ajustés pour obtenir la dissolution souhaitée.

Selon un mode de réalisation particulier, lesdits moyens de convoyage comportent au moins un câble apte à venir en contact avec ladite face fonctionnelle pour supporter ledit support.

Avantageusement, ledit câble est incliné vers la cuve de manière à former un angle α sensiblement égal ou inférieur à 3°, et de préférence sensiblement égal à 1,5° avec la surface libre de ladite solution acide.

Avantageusement, ladite cuve comporte également des moyens générateurs d'ultrasons. Ces moyens font également office de moyens de chauffage de la solution acide contenue dans la cuve. La cuve ou les cuves ou certaines des cuves du dispositif de l'invention peuvent également comprendre d'autres moyens de chauffage de la solution acide en plus ou à la place des moyens générateurs d'ultrasons. Lorsque le dispositif comporte plusieurs cuves, toutes les cuves ou seulement certaines peuvent être équipées de moyens générateurs d'ultrasons.

Avantageusement, ladite cuve comporte un bord sensiblement au niveau duquel se situe ladite surface libre formée par ladite solution acide, au moins une ouverture de débordement est ménagée dans ledit bord, ladite cuve comprend, en outre, un bac de récupération adapté pour recevoir la solution acide qui déborde par ladite ouverture de débordement et ledit dispositif comporte des moyens formant une pompe conformés pour injecter la solution acide contenue dans ledit bac de récupération dans ladite cuve et créer ainsi une circulation de ladite solution acide contenue dans ladite cuve.

L'injection de la solution ayant débordé permet de contrôler le niveau de solution acide dans la cuve et éventuellement sa température. Cette injection crée également une mise en circulation de la solution acide qui est ainsi en mouvement. Ce mouvement favorise l'extraction de l'ITO, par le renouvellement de la surface de la solution en contact avec la face fonctionnelle. Cette injection permet également d'obtenir une solution acide présentant une concentration homogène dans toute la cuve.

Les moyens formant pompe permettent également d'augmenter les échanges thermiques avec l'extérieur de manière à refroidir la solution acide ; en effet, lorsque la solution acide quitte la cuve et circule dans les conduites reliant la pompe à la cuve, la solution acide se refroidit à travers les conduites 30 en contact avec l'air ambiant.

Avantageusement, le dispositif comporte, en outre, un réservoir de solution acide connecté auxdits moyens formant pompe. Ce réservoir contenant de la solution acide à une température donnée permet également de réguler la température de la solution dans la cuve et de renouveler la solution acide contenue dans la cuve. Ce mode de réalisation permet également de créer une circulation de la solution acide dans la cuve.

Les moyens de convoyage ne sont pas limités selon la présente invention. Il peut s'agir de câbles ou de cordes, de moyens de succion du support, ou d'un grillage en acier inoxydable, par exemple.

Avantageusement, le dispositif de l'invention comporte une pluralité de cuves remplies de solution acide et lesdits moyens de convoyage sont conformés pour mettre en contact au moins ladite face fonctionnelle dudit support de manière successive avec la solution acide contenue dans chacune desdites cuves. Un tel dispositif permet de traiter en continu un grand nombre de supports.

La présente invention, ses caractéristiques et les divers avantages qu'elle procure apparaitront mieux à la lecture de la description qui suit d'un mode de réalisation de la présente invention, cité en tant qu'exemple non limitatif et qui fait référence aux dessins annexés sur lesquels :
- la Fig. 1 représente une vue schématique selon une coupe longitudinale d'un mode de réalisation du dispositif de l'invention ;
- la Fig. 2 représente une vue schématique en coupe selon la largeur de la cuve du dispositif de la Fig. 1 ;
- la Fig. 3 représente la disposition des moyens générateurs d'ultrasons dans la cuve du dispositif de la Fig. 1 ;
- la Fig. 4 représente une vue en coupe selon la largeur de la cuve, lorsqu'un support P se trouve dans la cuve ;
- la Fig. 5 représente un schéma d'un mode particulier de mise en œuvre de l'invention qui comporte plusieurs dispositifs comme celui représenté sur la Fig. 1 ;
- la Fig. 6 représente les variations de la température de la solution acide en fonction du temps, lorsqu'on génère des ultrasons dans le fond de la cuve du dispositif de l'invention ;
- les Fig. 7a et 7b représentent, respectivement, le signal obtenu pour l'indium et l'étain par balayage selon une droite, de la surface d'une plaque filtre coloré à l'aide d'une microsonde de Castaing, avant traitement selon le procédé de l'invention ; et
- les Fig. 8a et 8b représentent respectivement, le signal obtenu pour l'indium et l'étain par balayage selon une droite, de la surface de la plaque filtre coloré à l'aide d'une microsonde de Castaing, après traitement selon le procédé de l'invention.

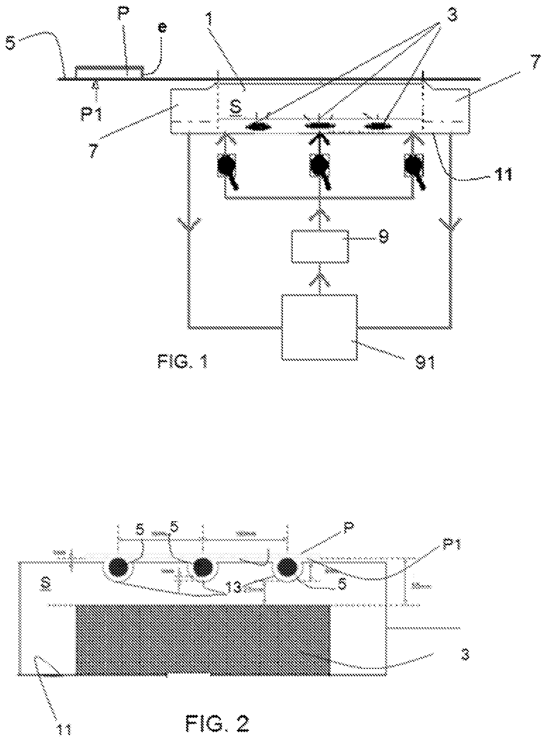

En référence à la Fig. 1, un mode de réalisation particulier du dispositif de l'invention va maintenant être décrit.

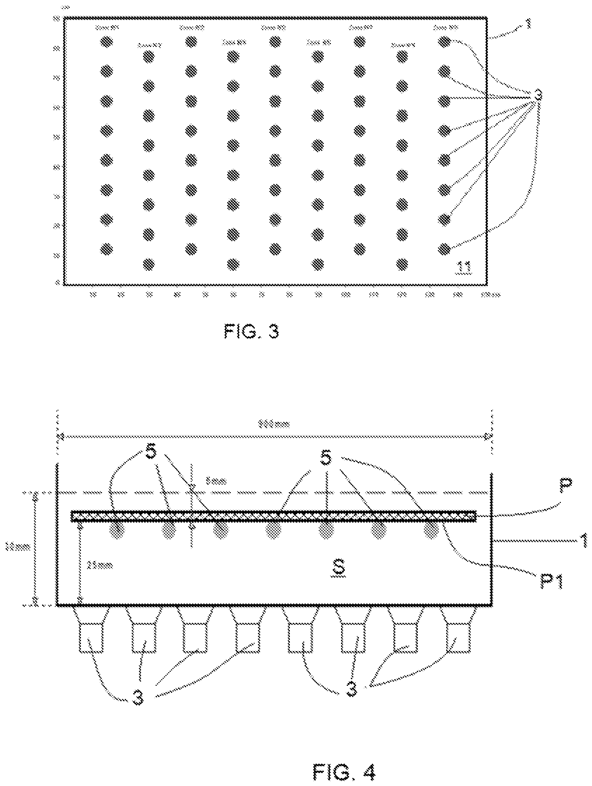

Comme représenté sur la Fig. 1, le dispositif de l'invention comporte une cuve 1, de section sensiblement rectangulaire, dont le fond 11 est équipé de cônes générateurs d'ultrasons 3 répartis sur le fond 11 de la cuve. La répartition des cônes sera plus amplement détaillée en référence à la Fig. 3. Le dispositif de l'invention comporte des moyens de convoyage qui comportent dans le cas présent une pluralité de câbles 5, parallèles entre eux. De chaque côté de la cuve 1 se trouve un bac de récupération 7 qui permet de récupérer la solution acide débordant de la cuve 1. Le dispositif comporte également une pompe 9 et un réservoir 91. Le réservoir 91 est relié par des conduites au fond de chacun des bacs de récupération 7. La pompe 9 est reliée au réservoir 91 et à trois points d'injections ménagés dans le fond 11 de la cuve 1. La pompe 9 est adaptée pour aspirer la solution acide contenue dans le réservoir 91 et l'injecter dans la cuve 1 de manière à faire monter le niveau de la solution acide S dans la cuve 1 et à renouveler la solution acide. Les conduites reliant la pompe 9 à la cuve 1 permettent également un échange thermique avec l'extérieur ce qui contribue au maintien de la température de la solution dans la cuve 1.

La Fig. 1 représente le dispositif de l'invention avant passage du support P au-dessus de la cuve 1. Le support P présente une épaisseur e sensiblement perpendiculaire aux câbles 5 et comporte une face fonctionnelle P1 recouverte d'ITO. La face fonctionnelle P1 est posée sur les câbles 5. Les câbles 5 sont tendus au-dessus de la cuve 1 et sont distants de la surface de la solution S contenue dans la cuve 1. Des moyens de mise en mouvement (non représentés) permettent de déplacer les câbles 5 selon leur longueur, ce qui a pour effet de déplacer le support P posé sur les câbles 5 vers la cuve 1. Les câbles 5 sont parallèles à la longueur de la cuve 1.

Selon un autre mode de réalisation, non représenté, les câbles sont plongés dans le bain de solution acide.

Comme représenté sur la Fig. 2, les parois verticales de la cuve 1 qui sont perpendiculaires aux câbles 5 comportent des ouvertures de débordement 13 pour le passage des câbles 5. Les ouvertures 13 débouchent au niveau du bord supérieur de la cuve 1. Ainsi, lorsque la pompe 9 est à l'arrêt, la surface de la solution acide S dans la cuve 1 se trouve au niveau du fond des ouvertures de débordement 13 ; les câbles 5 ne sont ainsi pas en contact avec la solution acide qui risque de les détériorer. Un espace d'environ 1mm sépare les câbles 5 du fond des ouvertures 13. Dans le mode de réalisation représenté, le dispositif de l'invention comporte trois câbles 5 parallèles qui passent chacun dans une ouverture 13 précité. Les ouvertures 13 permettent de ne pas mettre constamment en contact les câbles 5 avec la solution et permettent également à la solution acide de déborder dans les bacs de récupération 7, lorsque son niveau dépasse le fond des ouvertures 13.

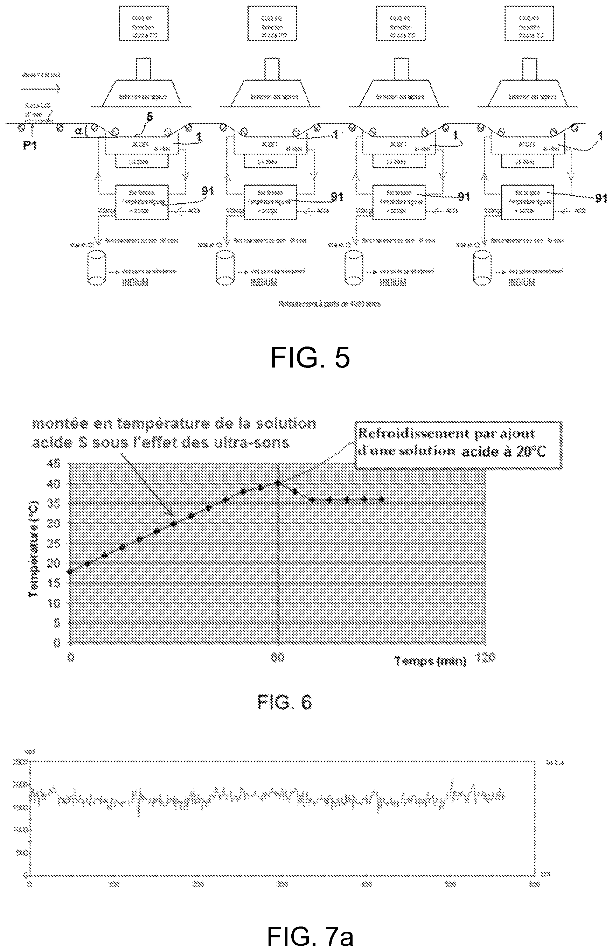

Bien que cela soit peu visible sur la Fig. 1, les câbles 5 forment avec la surface libre de la solution acide contenue dans la cuve 1, un angle a, sensiblement égal à 1,5°. Cet angle α permet de bien mouiller et immerger la face fonctionnelle P1 dans la solution acide S, comme expliqué ultérieurement en référence à la Fig. 5.

La Fig. 3 représente la disposition des cônes générateurs d'ultrasons 3 sur le fond 11 de la cuve 1. Les cônes 3 sont disposés selon 9 lignes parallèles à la largeur la cuve 1 et donc perpendiculaires aux câbles 5. Chaque ligne comporte 8 cônes 3. Si l'on considère deux lignes contigües, les cônes 3 d'une ligne sont disposés au niveau des espaces qui séparent les cônes 3 de l'autre ligne. Une telle disposition des cônes permet d'optimiser l'effet des ultrasons quelle que soit la surface de la face fonctionnelle du support à traiter

La Fig. 4 représente une vue en coupe selon la largeur de la cuve 1, lorsque la pompe 9 est en fonctionnement et que le support P est disposé dans la cuve 1 pour la dissolution de la couche d'ITO. Le support P est alors immergé dans la solution S de manière à augmenter le rendement d'ITO. Le niveau de cette dernière dépasse le fond des ouvertures de débordement 13 d'environ 5mm. Les câbles 5 sont dans la solution S qui déborde par les ouvertures de débordement 13 dans les bacs de récupération 7.

Le procédé de l'invention va maintenant être décrit en référence aux Fig. 1, 2 et 4. Le support P est disposé sur les câbles 5, face fonctionnelle P1 en appui sur ces derniers. Les câbles 5 sont ensuite mis en mouvement à vitesse variable et contrôlable. Le mouvement des câbles 5 entraine le support P vers la cuve 1. La vitesse de déroulement des câbles 5 est ajustée pour obtenir un décapage satisfaisant de la surface P1. La pompe 9 est mise en route avant que le support ne se trouve au-dessus de la cuve 1. Le niveau de la solution acide dans la cuve 1 augmente et celle-ci déborde au niveau des ouvertures 13 sans que son niveau ne s'abaisse. Le support P approche de la cuve 1 et pénètre dans la solution S selon la direction de la longueur des câbles 5. Les câbles 5 étant légèrement inclinés vers la cuve, le support P pénètre dans la solution S sans qu'il y ait de bulles ou de film d'air au niveau de la face fonctionnelle ; cette dernière est ainsi bien mouillée par la solution acide. Les câbles 5 ne sont inclinés qu'au niveau de l'entrée dans la cuve 1, ils sont ensuite horizontaux. Les câbles 5 étant toujours en mouvement, le support P continue d'avancer dans la solution S, la pompe 9 ajoute en continue du liquide provenant du réservoir 91 et/ou des bacs de récupération 7 ce qui permet de maintenir le niveau de la solution S dans la cuve 1 et de maintenir sa température constante. Les cônes générateurs d'ultrasons 3 génèrent des ultrasons qui provoquent la cavitation au niveau de la face P1 : des microbulles se forment au niveau de la surface de la face P1 ; ces microbulles implosent à la surface de la face fonctionnelle du support, favorisant un décrochage plus rapide de l'ITO. Le support P continue d'avancer dans la solution S. L'ITO de la face P1 est au moins partiellement dissout dans la solution acide S. La concentration en ITO de la solution S est mesurée régulièrement de façon à ne pas atteindre la saturation.

La Fig. 5 représente un second mode de réalisation du dispositif de l'invention qui permet sans arrêt des câbles 5 de dissoudre la couche d'ITO du support P. Les éléments de ce second mode de réalisation en commun avec le premier sont référencés à l'identique. Sur la Fig. 5, on voit bien l'angle α formé par les câbles 5 avec la surface libre de chacun des bains de solution acide. Le second mode de réalisation du dispositif de l'invention comporte 4 cuves telles que celle décrite en référence à la Fig. 1. Les moyens de convoyage 5 permettent de mettre en contact la face fonctionnelle P1 du support P successivement avec chacun des bains contenus dans les cuves 1. La vitesse d'avancée des câbles 5 est ajustée de manière à ce que le temps de contact total de la face fonctionnelle avec la solution acide soit suffisant pour dissoudre de manière satisfaisante la couche d'ITO. Par exemple, pour assurer 3 minutes de traitement par plaque: (180s x 3,52 cm/s = 633,6 cm), il suffit de mettre en place un nombre de cuves avec ultrasons de 4 (633,6 cm / 150 cm) ce qui correspond à la ligne d'extraction schématisée sur la Fig. 5. Les réservoirs 91 sont alimentés en solution acide fraîche et nouvelle (c'est-à-dire n'ayant pas servi à la dissolution d'ITO). Les solutions acides contenues dans les réservoirs 91 des cuves 1 sont régulièrement prélevées et envoyées vers une usine de retraitement qui permet de recycler l'indium, notamment. Il est possible de renouveler tout un réservoir 91 lorsque sa concentration en indium atteint une valeur donnée ou d'injecter régulièrement de la solution acide nouvelle et de prélever une quantité ad hoc de solution provenant du réservoir 91 pour son recyclage.

La Fig. 6 représente l'élévation de la température d'une solution acide S en fonction du temps, lorsque les cônes 3 génèrent des ultrasons. La température de la solution S croit régulièrement avec la chaleur générée par les ultrasons. Lorsque la température de la solution S dans la cuve 1 atteint 40°C (au bout de 60 minutes), on injecte dans la cuve 1 de la solution acide provenant du réservoir 91 et qui se trouve donc à une température de 20°C. On parvient ainsi à maintenir la température de la solution S dans la cuve à une valeur comprise entre 34 et 41°C et de préférence, sensiblement égale à 36°C comme indiqué sur la Fig. 6. Après environ 70 min de fonctionnement de la pompe 9 et des cônes 3, la température de la solution S dans la cuve se stabilise à la valeur précitée.

A titre d'exemple, si les ultrasons génèrent une puissance de 1800 W ; 587,54 W sont perdus par déperdition et 1212,45W permettent de chauffer régulièrement la solution acide qui passe ainsi de 20°C à 71°C en une heure. Pour maintenir la solution à une température constante, les 1212,45 W doivent être évacués par injection d'une solution acide à 20°C avec un débit de 11,62g/s dans la solution acide S qui est ainsi maintenue à 45°C.

### EXEMPLE

Un exemple particulier de mise en œuvre du procédé de la présente invention va maintenant être décrit.

La solution acide utilisée dans tout l'exemple est une solution contenant, en volume, 50% d'eau, 45% d'HCl à 33% en volume et 5% d'HNO3 à 60% en volume
L'efficacité du procédé a été testé grâce à des essais sur une machine pilote sur une vingtaine d'écrans LCD de différentes dimensions. Une cuve pilote a été mise en œuvre pour permettre des essais en laboratoire avant de réaliser les opérations d'extraction à l'échelle industrielle. Elle est décrite en référence aux Fig. 1 à 4 et présente des dimensions de 750 mm x 600 mm x 30 mm avec une capacité de 13,5L de solution acide. Le niveau maximum de la solution acide est donc situé à 30 mm du fond de la cuve. Les câbles sont légèrement inclinés de façon à bien faire pénétrer le support dans la solution S. A cet effet, les câbles présentent une inclinaison de 1,5° par rapport à l'horizontale, en direction du fond de la cuve 1. L'activation ultrasonore est assurée par une série de 16 cônes collés en fond de cuve et alimentés par 2 générateurs ultrasonores qui fournissent une puissance totale de 800W.

### Essais N°1 : Détermination des paramètres (température du bain, durée de traitement)

Pour vérifier si l'extraction de l'ITO est correctement effectuée, une méthode simple consiste à mesurer la résistance électrique par carré R de la couche d'ITO via un multimètre numérique placé sur le calibre ohmmètre. Les pointes de touche du multimètre doivent être placées à une distance proche de 1 cm.

Dans un premier temps, des essais ont été réalisés sur des échantillons d'écrans plats de 5cmx5cm, immergé dans un bêcher contenant 1 litre de solution acide. Le bêcher est placé dans la cuve du pilote au-dessus d'un pavé immergeable à une distance de 30mm. La cuve est remplie d'eau à température ambiante. Deux températures de solution sont testées (20°C et 50°C). La résistance par carré R de la couche d'ITO est mesurée avant et après traitement. Avant traitement selon le procédé de l'invention, R = 36,4Ω/carré ; après traitement R = 48,55 MΩ/carré, ce qui prouve que la couche d'ITO a bien été retirée.

Les résultats de dissolution sont les suivants :
Température de la solution : 20°C : pas de retrait de la couche d'ITO obtenu à 3 minutes
Température de la solution 50°C : retrait de la couche d'ITO obtenue à partir de 1 minute 30.

On constate donc qu'une température plus élevée accélère la dissolution de la couche d'ITO. (Les valeurs précitées de R attestent de cette dissolution)

Essais N°2 : Cette série d'essais a été réalisée sur le pilote, avec des plaques d'écran 32"de diagonale. 20 litres de solution acide sont préparés : 14 litres dans la cuve et 6 litres dans le réservoir. La pompe est mise en fonctionnement pour faire déborder le bain dans la cuve 1 (débit : 3 litres / min). Distance cônes ultrasonores / plaque = 30mm
La plaque est placée sur les 3 cordes du convoyeur, face fonctionnelle recouverte d'ITO en contact avec les cordes. La plaque n'est pas immergée mais sa face recouverte d'ITO est plongée dans la solution acide. La surface de la solution acide affleure légèrement la face inférieure des câbles. La vitesse du convoyeur est réglée pour que le temps de passage de la plaque dans le bain dure 1min30 ou 3min. Le calcul est basé sur la "longueur du bain" de 750 mm.

Vitesse d'avance pour une durée de traitement de 1min30 = 0,84 cm/s
Vitesse d'avance pour une durée de traitement 3min = 0,42 cm/s
Température du bain = 20°C : pas d'extraction de l'ITO au bout de 3 minutes ;
Température du bain = 40 °C : extraction partielle de l'ITO au bout de 3 minutes
Température du bain = 45°C : extraction complète de l'ITO au bout de 1 minute 30 secondes

La température du bain de 45°C est obtenue par l'échauffement lié aux ultrasons générés dans le bain. Le passage de 20°C à 45°C s'effectue en 30 minutes environ avec la génération d'ultra-sons dans les conditions indiquées ci-dessous. L'équilibre thermique est atteint au bout de 1h30 de fonctionnement. La température du bain se stabilise autour de 45°C.

Ainsi, la puissance des ultrasons est de 800W pour 14 litres soit une densité de puissance sensiblement égale à 57W/litre. La vitesse d'avancement de la plaque dans la solution semble ne pas avoir d'influence sur le décapage de la couche d'ITO ; en effet, seule la durée de contact de la couche d'ITO avec la solution acide semble déterminante. On choisit une vitesse d'avancement de la plaque qui permet de laisser la couche d'ITO en contact avec la solution acide pendant 3 min30. De plus, même si la plaque n'est pas immergée, l'extraction de l'ITO recouvrant la surface de la plaque en contact avec la solution acide est possible.

### Essais N°3 : Vérification de l'extraction de l'ITO à la microsonde de Castaing (EPMA).

Principe de la microsonde : La microsonde de Castaing (en anglais « electron probe microanalyser », EPMA) est une méthode d'analyse élémentaire. Elle consiste à bombarder un échantillon avec des électrons et à analyser le spectre des rayons X émis par l'échantillon sous cette sollicitation. Lors du bombardement d'un échantillon, certains électrons cèdent une partie de leur énergie cinétique à l'atome, provoquant l'éjection d'un électron de l'atome ; l'atome est dit « excité ». Si l'électron éjecté est proche du noyau de l'atome, un électron d'une couche périphérique va descendre vers une couche d'énergie plus faible (l'atome se désexcite), et ce faisant, il va émettre un photon. Du fait de l'énergie de transition, ce photon va appartenir au domaine des rayons X.

L'analyse du spectre X peut se faire soit par dispersion de longueur d'onde (ou WDS pour « wavelength dispersive spectroscopy »), c'est-à-dire que les photons X sont séparés par diffraction sur un cristal ou bien par dispersion de l'énergie (ou EDS pour « energy dispersive spectroscopy »), le détecteur est alors un semi-conducteur qui produit des pics de tension proportionnels à l'énergie du photon.

L'énergie hv du photon X, générée par la désexcitation de l'atome suite au départ d'un électron secondaire, est caractéristique des transitions électroniques de l'atome et donc de sa nature chimique. On parle de « raie d'émission caractéristique ». La microsonde X permet une analyse jusqu'à une profondeur d'environ 1µm.

### Résultats d'analyse par microsonde :

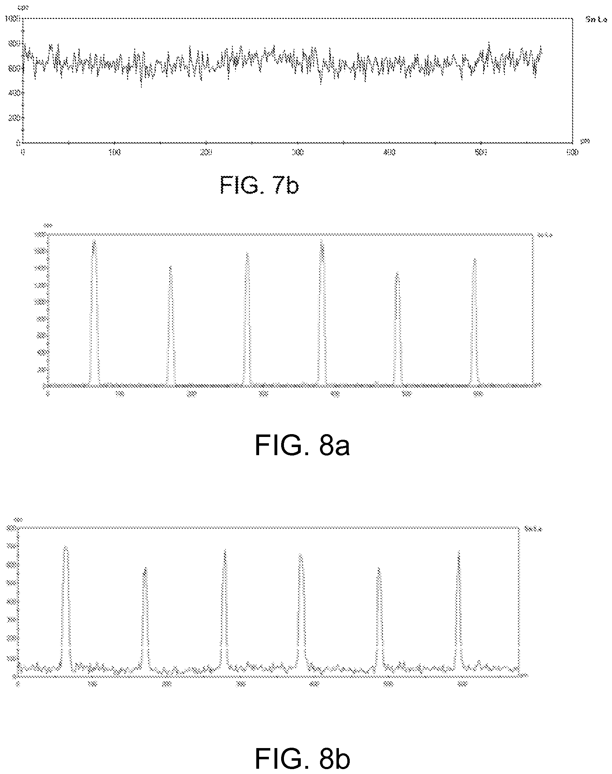

Les Fig.7a et 7b représentent le signal obtenu avec la sonde de Castaing avant traitement selon le procédé de l'invention, d'une plaque filtre coloré d'un écran 32". La Fig. 7a correspond au signal de l'indium. Sur cette figure, on observe un signal continu et régulier (2000 cps) qui atteste de la présence d'indium sur toute la surface de la plaque. La Fig. 7b montre un signal équivalent (700 cps) pour l'étain, qui atteste de la présence d'étain sur toute la surface de la plaque avant traitement.

La plaque précitée est traitée selon le procédé de l'invention (durée du traitement 3min / température de la solution acide 45°C). Par balayage avec la sonde de Castaing comme précité, on obtient les signaux correspondant à l'indium et à l'étain représentés respectivement sur les Fig. 8a et 8b.

Les Fig. 8a et 8b montrent des signaux présentant des pics régulièrement espacés. Les pics correspondant à l'indium ont la même position que ceux correspondant au signal de l'étain. Les signaux des Fig. 8a et 8b attestent que l'ITO a bien été retiré de la plus grande partie de la surface de la plaque. Il demeure néanmoins des résidus d'ITO au niveau des bandes de la Black Matrix ; ce sont ces résidus qui génèrent les pics visibles sur les Fig. 8a et 8b.

## Revendications

1. Procédé de traitement d'un élément du type comprenant au moins un premier support présentant une face fonctionnelle au moins partiellement recouverte d'une couche d'oxyde d'indium et d'étain (ITO), selon lequel , on met en contact ladite face fonctionnelle avec une solution acide de manière à dissoudre ladite couche d'ITO dans ladite solution acide, **caractérisé en ce que** l'on déplace ledit premier support au moins après avoir mis en contact au moins ladite face fonctionnelle avec ladite solution acide, et
**caractérisé en ce que** ledit premier support présente une épaisseur qui s'étend sensiblement perpendiculairement à ladite face fonctionnelle, **en ce que** ladite solution acide forme une surface libre, **en ce qu'**on dispose ladite face fonctionnelle de manière à ce qu'elle soit inclinée vers ladite surface libre de ladite solution acide et **en ce que** l'on fait pénétrer au moins ladite face fonctionnelle dans ladite solution acide, ladite surface fonctionnelle et ladite surface libre de ladite solution acide formant un angle α sensiblement égal ou inférieur à 3°.

2. Procédé selon la revendication 1, **caractérisé en ce que** ledit élément comprend, en outre, un deuxième support présentant une face fonctionnelle au moins partiellement recouverte d'ITO, **en ce que** lesdites faces fonctionnelles sont montées en regard l'une de l'autre, **en ce qu'**on sépare lesdits premier et deuxième supports l'un de l'autre puis l'on met en contact ladite face fonctionnelle dudit premier et/ou deuxième support en contact avec ladite solution acide de manière à dissoudre ladite couche d'ITO dans ladite solution acide, **en ce que** ledit premier et/ou deuxième support comporte éventuellement une face fonctionnelle recouverte d'un filtre coloré lui-même partiellement recouvert par ladite couche d'ITO et **en ce que** ledit élément comprend éventuellement des cristaux liquides contenus entre ledit premier et ledit deuxième support que l'on retire de ladite face fonctionnelle dudit premier et/ou deuxième support après la séparation desdits supports et avant la mise en contact avec ladite solution acide.

3. Procédé selon la revendication 1 ou 2, **caractérisé en ce que** ladite surface fonctionnelle et ladite surface libre de ladite solution acide forment un angle α sensiblement égal à 1,5°.

4. Procédé selon l'une quelconque des revendications précédentes, **caractérisé en ce que** ladite solution acide est à une température sensiblement égale ou supérieure à 25°C et sensiblement égale ou inférieure à 70°C, de préférence sensiblement égale ou supérieure à 40°C et sensiblement égale ou inférieure à 50°C, de préférence sensiblement égale à 45°C et **en ce qu'**elle est de préférence, une solution aqueuse contenant de l'acide chlorhydrique et de l'acide nitrique, de préférence une solution contenant en volume, de 45% à 55% d'eau, de 35% à 45% d'une solution aqueuse d'acide chlorhydrique à 33% en volume et de 5 à 15% d'une solution aqueuse d'acide nitrique à 60% en volume, de préférence elle contient sensiblement 50% d'eau, 45% d'une solution d'acide chlorhydrique à 33 % en volume et 5% d'une solution d'acide nitrique à 60 % en volume.

5. Procédé selon l'une quelconque des revendications précédentes, **caractérisé en ce qu'**on génère des ultrasons dans ladite solution acide de manière à provoquer le phénomène de cavitation, notamment au niveau de ladite face fonctionnelle et **en ce que** lesdits ultrasons ont, de préférence, une fréquence sensiblement égale ou supérieure ou égale à 20 kHz et sensiblement égale ou inférieure ou égale à 30 kHz et/ou une densité de puissance sensiblement égale ou supérieure à 57W/L et de préférence sensiblement égale à 103W/L.

6. Procédé selon l'une quelconque des revendications précédentes, **caractérisé en ce que** l'on crée une circulation de ladite solution acide au moins au niveau de la surface libre de ladite solution acide.

7. Procédé selon l'une quelconque des revendications précédentes, **caractérisé en ce que** l'on met en contact au moins ladite face fonctionnelle dudit premier et/ou deuxième support avec un premier bain de solution acide puis avec au moins un deuxième bain d'une solution acide.

8. Dispositif permettant la mise en œuvre du procédé selon l'une quelconque des revendications précédentes du type comprenant au moins une cuve (1) remplie d'une solution acide (S) formant une surface libre, **caractérisé en ce qu'**il comprend en outre des moyens de convoyage (5) d'un support (P) présentant une face fonctionnelle (P1) au moins partiellement recouverte d'ITO, **en ce que** ladite cuve (1) et lesdits moyens de convoyage (5) sont adaptés pour mettre en contact au moins ladite face fonctionnelle (P1) dudit support (P) avec ladite solution acide (S) contenue dans ladite cuve (1) de manière à ce que ladite face fonctionnelle soit inclinée vers ladite surface libre de ladite solution acide en formant un angle α sensiblement égal ou inférieur à 3° et pour immerger l'épaisseur (e) dudit support sur une hauteur au moins égale à l'épaisseur de ladite couche d'ITO, lorsque lesdits moyens de convoyage (5) coopèrent avec ledit support (P) et **en ce que** lesdits moyens de convoyage (5) sont conformés pour déplacer ledit support (P) dans ladite cuve (1).

9. Dispositif selon la revendication 8, **caractérisé en ce que** lesdits moyens de convoyage (5) comportent au moins un câble (5) apte à venir en contact avec ladite face fonctionnelle pour supporter ledit support.

10. Dispositif selon la revendication 9, **caractérisé en ce que** ledit câble est incliné vers la cuve (1) de manière à former un angle α sensiblement égal ou inférieur à 3°, et de préférence sensiblement égal à 1,5° avec la surface libre de ladite solution acide.

11. Dispositif selon l'une quelconque des revendications 8 à 10, **caractérisé en ce que** ladite cuve (1) comporte des moyens générateurs d'ultrasons (3).

12. Dispositif selon l'une quelconque des revendications 8 à 11, **caractérisé en ce que** ladite cuve (1) comporte un bord sensiblement au niveau duquel se situe ladite surface libre formée par ladite solution acide (S), **en ce qu'**au moins une ouverture de débordement (13) est ménagée dans ledit bord, **en ce que** ladite cuve (1) comprend, en outre, un bac de récupération (7) adapté pour recevoir la solution acide (S) qui déborde par ladite ouverture de débordement (13) et **en ce que** ledit dispositif comporte des moyens formant une pompe (9) conformés pour injecter la solution acide contenue dans ledit bac de récupération (7) dans ladite cuve (1) et créer ainsi une circulation de ladite solution acide (S) contenue dans ladite cuve (1).

13. Dispositif selon l'une quelconque des revendications 8 à 12, **caractérisé en ce qu'**il comporte, en outre, un réservoir (91) de solution acide connecté auxdits moyens formant pompe (9).

14. Dispositif selon l'une quelconque des revendications 8 à 13, **caractérisé en ce qu'**il comporte une pluralité de cuves (1) remplies de solution acide et **en ce que** lesdits moyens de convoyage (5) sont conformés pour mettre en contact ladite face fonctionnelle (P1) dudit support (P) de manière successive avec la solution acide contenue dans chacune desdites cuves (1).

## Patentansprüche

1. Verfahren zur Behandlung eines Elements des Typs aufweisend mindestens einen ersten Träger mit einer funktionellen Fläche, die mindestens teilweise mit einer Schicht aus Indium-Zinn-Oxid (ITO) bedeckt ist, wobei die funktionelle Fläche mit einer Säurelösung in Kontakt gebracht wird, um die ITO-Schicht in der Säurelösung aufzulösen, **dadurch gekennzeichnet, dass** der erste Träger mindestens nach dem Inkontaktbringen von mindestens der funktionellen Fläche mit der Säurelösung wegbewegt wird, und
**gekennzeichnet dadurch, dass** der erste Träger eine Dicke hat, die sich im Wesentlichen senkrecht zu der funktionellen Fläche erstreckt, dadurch, dass die Säurelösung eine freie Fläche bildet, dadurch, dass die funktionelle Fläche so angeordnet wird, dass sie zu der freien Fläche der Säurelösung geneigt ist und dadurch, dass mindestens die funktionelle Fläche dazu gebracht wird, in die Säurelösung einzudringen, wobei die funktionelle Fläche und die freie Fläche der Säurelösung einen Winkel α im Wesentlichen gleich oder kleiner als 3° bilden.

2. Verfahren nach Anspruch 1, **gekennzeichnet dadurch, dass** das Element ferner einen zweiten Träger mit einer funktionellen Fläche aufweist, die mindestens teilweise mit ITO bedeckt ist, dadurch, dass die funktionellen Flächen einander zugewandt angebracht sind, dadurch, dass der erste und der zweite Träger voneinander getrennt werden und dann die funktionelle Fläche des ersten und / oder des zweiten Trägers mit der Säurelösung in Kontakt gebracht wird, um die ITO-Schicht in der Säurelösung aufzulösen, dadurch, dass der erste und / oder der zweite Träger gegebenenfalls eine funktionelle Fläche aufweist, die von einem Farbfilter bedeckt ist, der seinerseits teilweise von der ITO-Schicht bedeckt ist, und dadurch, dass das Element gegebenenfalls Flüssigkristalle aufweist, die zwischen dem ersten und dem zweiten Träger enthalten sind, die von der funktionellen Fläche des ersten und / oder zweiten Trägers nach der Trennung der Träger und vor dem Inkontaktbringen mit der Säurelösung entfernt werden.

3. Verfahren nach Anspruch 1 oder 2, **dadurch gekennzeichnet, dass** die funktionelle Fläche und die freie Fläche der Säurelösung einen Winkel α bilden, der im Wesentlichen gleich 1,5 ° beträgt.

4. Verfahren nach einem der vorhergehenden Ansprüche, **dadurch gekennzeichnet, dass** die Säurelösung auf einer Temperatur ist, die im Wesentlichen gleich oder größer als 25°C und im Wesentlichen gleich oder kleiner als 70°C ist, und vorzugsweise im Wesentlichen gleich oder größer als 40°C und im Wesentlichen gleich oder kleiner als 50°C, vorzugsweise im Wesentlichen gleich 45°C, und dadurch, dass sie vorzugsweise eine wässrige Lösung mit Salzsäure und Salpetersäure, vorzugsweise eine Lösung mit, in Volumen, von 45% bis 55% Wasser, von 35% bis 45% einer wässrigen Lösung von Salzsäure 33 Vol.-% und von 5 bis 15 Vol.-% einer wässrigen Lösung Salpetersäure 60 Vol.-%, vorzugsweise mit im Wesentlichen 50% Wasser, 45% einer Lösung von Salzsäure 33 Vol.-% und 5% einer Salpeterlösung 60 Vol.-%.

5. Verfahren nach einem der vorhergehenden Ansprüche, **dadurch gekennzeichnet, dass** Ultraschalle in der Säurelösung derart erzeugt werden, so dass das Kavitationsphänomen, insbesondere auf der Höhe der funktionellen Fläche, hervorgerufen wird, und dadurch, dass die Ultraschalle vorzugsweise eine Frequenz, die im Wesentlichen gleich oder größer gleich 20 kHz und im Wesentlichen gleich oder kleiner gleich 30 kHz ist, und/oder eine Leistungsdichte aufweisen, die im Wesentlichen gleich oder größer als 57 W/L und vorzugsweise im Wesentlichen gleich 103 W/L ist.

6. Verfahren nach einem der vorhergehenden Ansprüche, **dadurch gekennzeichnet, dass** mindestens auf Höhe der freien Fläche der Säurelösung ein Fluss der Säurelösung erzeugt wird.

7. Verfahren nach einem der vorhergehenden Ansprüche, **dadurch gekennzeichnet, dass** mindestens die funktionelle Fläche des ersten und / oder zweiten Trägers mit einem ersten Säurelösungsbad und dann mit mindestens einem zweiten Säurelösungsbad in Kontakt gebracht wird.

8. Vorrichtung zur Durchführung des Verfahrens nach einem der vorhergehenden Ansprüche des Typs aufweisend mindestens einen Behälter (1), der mit einer Säurelösung (S) gefüllt ist, die eine freie Fläche bildet, **dadurch gekennzeichnet, dass** sie ferner Mittel zum Transport (5) eines Trägers (P) mit einer mindestens teilweise mit ITO bedeckten funktionellen Fläche (P1) aufweist, **dadurch gekennzeichnet, dass** der Behälter (1) und die Mittel zum Transport (5) geeignet sind, mindestens die funktionelle Fläche (P1) des Trägers (P) mit der in dem Behälter (1) enthaltenen Säurelösung (S) derart in Kontakt zu bringen, dass die funktionelle Fläche in Richtung zu der freien Fläche der Säurelösung geneigt ist, unter Bildung eines Winkels a, der im Wesentlichen gleich oder kleiner als 3 °ist,
und um die Dicke (e) des Trägers um eine Höhe einzutauchen, die mindestens gleich der Dicke der ITO-Schicht ist, wenn die Mittel zum Transport (5) mit dem Träger (P) kooperieren, und dadurch, dass die Mittel zum Transport (5) gebildet sind, um den Träger (P) in den Behälter (1) zu bewegen.

9. Vorrichtung nach Anspruch 8, **dadurch gekennzeichnet, dass** die Mittel zum Transport (5) mindestens ein Seil (5) aufweisen, das geeignet ist, mit der funktionellen Fläche in Kontakt zu kommen, um den Träger zu tragen.

10. Vorrichtung nach Anspruch 9, **dadurch gekennzeichnet, dass** das Kabel in Richtung zu dem Behälter (1) geneigt ist, unter Bildung eines Winkels a, der im Wesentlichen gleich oder kleiner als 3° ist, und vorzugsweise im Wesentlichen gleich 1,5°, mit der freien Fläche der Säurelösung.

11. Vorrichtung nach einem der Ansprüche 8 bis 10, **dadurch gekennzeichnet, dass** der Behälter (1) Ultraschallerzeugungsmittel (3) aufweist.

12. Vorrichtung nach einem der Ansprüche 8 bis 11, **dadurch gekennzeichnet, dass** der Behälter (1) einen Rand aufweist, im Wesentlichen auf Höhe dessen sich die durch die Säurelösung (S) gebildete freie Fläche befindet, dadurch, dass mindestens eine Überlauföffnung (13) in dem Rand ausgebildet ist, dadurch, dass der Behälter (1) ferner einen Auffangbehälter (7) aufweist, der eingerichtet ist, um die Säurelösung (S) aufzunehmen, die durch die Überlauföffnung (13) überläuft, und dadurch, dass die Vorrichtung eine Pumpe (9) bildende Mittel aufweist, die so gebildet sind, um die in dem Auffangbehälter (7) enthaltene Säurelösung in den Behälter (1) einzuspritzen und dadurch einen Kreislauf der in dem Behälter enthaltenen Säurelösung (S) zu erzeugen.

13. Vorrichtung nach einem der Ansprüche 8 bis 12, **dadurch gekennzeichnet, dass** sie ferner einen Tank (91) von Säurelösung aufweist, der mit den eine Pumpe (9) bildenden Mitteln verbunden ist.

14. Vorrichtung nach einem der Ansprüche 8 bis 13, **dadurch gekennzeichnet, dass** sie mehrere mit Säurelösung gefüllte Behälter (1) aufweist und dadurch, dass die Mittel zum Transport (5) so gebildet sind, um die funktionelle Fläche (P1) des Trägers (P) sukzessiv mit der in jedem der Behälter (1) enthaltenen Säurelösung in Kontakt zu bringen.

## Claims

1. Method of treating an element of the type comprising at least one first support which has a functional face at least partially covered by a layer of indium and tin (ITO) oxide, according to which said functional face is placed in contact with an acid solution so as to dissolve said layer of ITO in said acid solution, **characterised in that** said first support is displaced at least after having placed in contact at least said functional face with said acid solution, and **characterised in that** said first support has a thickness which extends substantially perpendicular to said functional face, **in that** said acid solution forms a free surface, **in that** said functional face is disposed so that it is inclined towards said free surface of said acid solution and **in that** at least said functional face is made to penetrate into said acid solution, said functional surface and said free surface of said acid solution forming an angle α substantially equal to or less than 3°.

2. Method according to claim 1, **characterised in that** said element comprises, in addition, a second support having a functional face at least partially covered with ITO, **in that** said functional faces are mounted one opposite the other, **in that** said first and second supports are separated one from the other then said functional face of said first and/or second support is placed in contact with said acid solution so as to dissolve said layer of ITO in said acid solution, **in that** said first and/or second support possibly comprises a functional face covered with a coloured filter itself partially covered by said layer of ITO and **in that** said element possibly comprises liquid crystals contained between said first and said second support which are withdrawn from said functional face of said first and/or second support after separation of said supports and before being placed in contact with said acid solution.

3. Method according to claim 1 or 2, **characterised in that** said functional surface and said free surface of said acid solution form an angle α substantially equal to 1.5°.

4. Method according to any of the preceding claims, **characterised in that** said acid solution is at a temperature substantially equal to or greater than 25°C and substantially equal to or less than 70°C, preferably substantially equal to or greater than 40°C and substantially equal to or less than 50°C, preferably substantially equal to 45°C, and **in that** it is preferably an aqueous solution containing hydrochloric acid and nitric acid, preferably a solution containing by volume, from 45% to 55% of water, from 35% to 45% of an aqueous hydrochloric acid solution at 33% by volume and from 5 to 15% of an aqueous nitric acid solution at 60% by volume, preferably it contains substantially 50% of water, 45% of a hydrochloric acid solution at 33% by volume and 5% of a nitric acid solution at 60% by volume.

5. Method according to any of the preceding claims, **characterised in that** ultrasounds are generated in said acid solution so as to cause the phenomenon of cavitation, in particular at the level of said functional face and **in that** said ultrasounds have preferably a frequency substantially equal to or greater than or equal to 20 kHz and substantially equal to or less than or equal to 30 kHz and/or a power density substantially equal to or greater than 57 W/1 and preferably substantially equal to 103 W/1.

6. Method according to any of the preceding claims, **characterised in that** a circulation of said acid solution is produced at least at the level of the free surface of said acid solution.

7. Method according to any of the preceding claims, **characterised in that** at least said functional face of said first and/or second support is placed in contact with a first acid solution bath then with at least a second acid solution bath.

8. Device allowing implementation of the method according to any of the preceding claims of the type comprising at least one tank (1) filled with an acid solution (S) forming a free surface, **characterised in that** it comprises, in addition, means of conveying (5) a support (P) having a functional face (P1) at least partially covered with ITO, **in that** said tank (1) and said conveying means (5) are adapted in order to place in contact at least said functional face (P1) of said support (P) with said acid solution (S) contained in said tank (1) so that said functional face is inclined towards said free surface of said acid solution by forming an angle α substantially equal to or less than 3° and in order to immerse the thickness (e) of said support over a height at least equal to the thickness of said layer of ITO, when said conveying means (5) cooperate with said support (P) and **in that** said conveying means (5) are formed to displace said support (P) into said tank (1).

9. Device according to claim 8, **characterised in that** said conveying means (5) comprise at least one cable (5) able to come into contact with said functional face in order to support said support.

10. Device according to claim 9, **characterised in that** said cable is inclined towards the tank (1) so as to form an angle α substantially equal to or less than 3°, and preferably substantially equal to 1.5° with the free surface of said acid solution.

11. Device according to any of the claims 8 to 10, **characterised in that** said tank (1) comprises generating means for ultrasounds (3).

12. Device according to any of the claims 8 to 11, **characterised in that** said tank (1) comprises an edge substantially at the level of which said free surface formed by said acid solution (S) is situated, **in that** at least overflow opening (13) is provided in said edge, **in that** said tank (1) comprises, in addition, a recovery tank (7) adapted to receive the acid solution (S) which spills over via said overflow opening (13) and **in that** said device comprises means forming a pump (9) formed in order to inject the acid solution contained in said recovery tank (7) into said tank (1) and thus to create a circulation of said acid solution (S) contained in said tank (1).

13. Device according to any of the claims 8 to 12, **characterised in that** it comprises, in addition, a reservoir (91) of acid solution connected to said means forming the pump (9).

14. Device according to any of the claims 8 to 13, **characterised in that** it comprises a plurality of tanks (1) filled with acid solution and **in that** said conveying means (5) are formed to place in contact said functional face (P1) of said support (P) successively with the acid solution contained in each of said tanks (1).
